# EUROPÄISCHE PATENTSCHRIFT

(11) **EP 1 786 635 B1**
(45) Veröffentlichungstag und Bekanntmachung des Hinweises auf die Patenterteilung: **17.12.2008**
(21) Anmeldenummer: 05779390.3
(22) Anmeldetag: 14.08.2005
(51) Int. Cl.: B60C 5/10, B60C 5/24

(54) **OFFENER RADSCHLAUCH**
OPEN INNER TUBE
BOYAU DE ROUE OUVERT

(30) Priorität: 15.08.2004 DE 102004039657; 14.02.2005 DE 102005006805
(43) Veröffentlichungstag der Anmeldung: 23.05.2007
(73) Patentinhaber: Jetten, Adolf, 41063 Mönchengladbach (DE); Petrovan, Gabriel, 41812 Erkelenz (DE)
(72) Erfinder: Jetten, Adolf, 41063 Mönchengladbach (DE)
(74) Vertreter: Springorum, Harald
(86) Internationale Anmeldenummer: PCT/DE2005/001430
(87) Internationale Veröffentlichungsnummer: WO 2006/018012

(56) Entgegenhaltungen:
- WO-A-97/25215
- AT-B- 31 915
- DE-A1- 3 729 670
- DE-A1- 19 828 412
- DE-U1- 9 202 345
- GB-A- 175 357

## Beschreibung

Die vorliegende Erfindung betrifft Radschläuche und Vorrichtungen für Radschläuche. Radschläuche und Radschlauchsysteme werden oftmals auf Felgen aufgespannt, um die Abnutzung der Felgen, welche aus statten und stabilen Materialen gefertigt sind entgegen zu wirken und auch gleichzeitig als Dämpfungsmaterial bei Stößen oder sonstigen Erschütterungen zu dienen.

Jedermann sind in diesem Zusammenhang Radschläuche in Autoreifen oder Fahrradreifen bekannt. Zwar werden die Radschläuche, welche meist mit einem Gas gefüllt werden und deshalb einem aus einem elastischen Material bestehen durch einen Mantel geschürzt, aber dennoch können diese Schläuche zerstört werden. Jedem Fahrradfahrer ist dies als "Platter" bekannt, also ein nicht mehr mit Luft gefüllter Reifen, nachdem er durch Glasseherben Nägel oder andere spitze Gegenstände befahren ist. Gleiches kann auch dem Autofahrer passieren. Ein Austausch eines solche "platten Schlauches" gestaltet sich sehr aufwendig, da das gesamte Rad aus seiner Halterung ausgebaut werden muss. Danach muss der Mantel von der Felge entfernt werden, um den Endlosschlauch abziehen zu können. Der Schlauch wird nun mit Hilfe eines Flicken, der aufgebracht wird repariert. Diese Methode ist umständlich und zeitaufwendig. Besonders das Ausbauen des Rades aus der Halterung kann hierbei sehr kompliziert sein. So sind beim Fahrrad die Hinterrader besonders "gefürchtet", da sie meist über die Kette eine Verbindung mit der Pedale aufweisen, welches den Ausbau des Rades zusätzlich kompliziert. Weiterhin kann sich eine Reparatur noch schwieriger gestalten, wenn sie unterwegs ohne die passenden Werkzeuge ausgeführt werden muss. Bekannt sind nicht geschlossene Schläuche (siehe gattungsgemäße DE 198 28 412 A1, WO 97/25215 A, DE 3729670 A1, AT31915 B, GB 175 357 A, DE 9202345 U1).

Aufgabe ist es nun einen Radschlauch zu erfinden, welcher diesen zeitraubenden und damit auch teuren Reparaturvorgang verkürzt, ohne den Schlauch größtenteils von der Felge zu entfernen.

Diese Aufgabe wird durch Anspruch 1. weitere vorteilhafte Ausgestalltungen ergeben sich aus den Unteransprüchen. Durch diese Besonderheit kann der Radschlauch nun erheblich leichter auf die jeweilige Felge aufgezogen werden. Hierzu muss nur noch der Radmantel angehoben und danach der defekte Endlosschlauch zerschnitten werden. Der erfindungsgemäße Radschlauch kann jetzt einfach unten Mantel geschoben werden und wird dann dort wieder mit Gas, Flüssigkeit, einem Schaum oder einem anderen geeigneten Feststoff oder Mischungen aus diesen Materialien gefüllt. Als Radschlauchmaterial können alle herkömmlichen Materialien dienen, so zum Beispiel Kautschuk, Gummi, Polymerzusammensetzungen, Plastik oder Ähnliches. Die Befüllung des Radschlauches ist durch einen Einlass, wie einem Ventil möglich. Jeder andere Einlass kann aber ebenso an den Schlauch angebracht werden.

Durch die Befüllung wird in dem Schlauch eine Druck aufgebaut, welche die Schlauchenden zusammendrückt, so dass das gesamte Rad nun überall einen gleichmäßigen Druck, z. B. Luftdruck aufweist.

In einer anderen Ausführungsform der Erfindung weist der Schlauch an bestimmten Stellen unterschiedliche elastische Eigenschaften auf. Hierdurch kann eine gewünschte Schlauchkrümmung erzeugt werden. Diese Krümmung kann beispielsweise durch Aufbringen eines anderen Materials auf den Radschlauch erzeugt werden. Auch kann das eigentliche Schlauchmaterial, das "Hauptmaterial", an geeigneten Stellen verstärkt oder auch ausgedünat sein. Ein solche Verstärkung kann auch die Haltbarkeit des Schlauches an besonders strapazierten Stellen verlängern. Änderung des Materials führt natürlich auch zu unterschiedlichen Ausdehnungsmöglichkeiten des Schlauches in allen Richtungen. Wobei die Ausdehnungsgeschwindigkeit unter anderem von der Ausdehnungsfähigkeit abhängt.

In einer ganz besonderen Ausführungsform der vorliegenden Erfindung kann dem Radschlauch oder Teilen des Radschlauches ein Profil aufgeprägt sein. Diese Profil kann das Einführen des Schlauches unter den Mantel bei der Reparatur erleichtern, sowie ein Verrutschen oder Verschieben des Schlauches nach dem Aufspannen auf die Felge verhindern und außerdem die mechanischen Eigenschaften des Radschlauches unterstützen. Form und Tiefe des Profils werden unter anderem durch die physikalischen Eigenschaften des Schlauches und dem gewünschten Erfolg bestimmt.

Eine weitere Ausführungsform der Erfindung ist **dadurch gekennzeichnet, dass** der Schlauch oder Teile des Schlauches Mittel aufweisen, welche den Schlauch mit dem Laufrad, der Felge oder der Führung und/oder dem Mantel verbinden. Diese Mittel, die den Schlauch mit der Felge oder Mantel oder beidem verbinden, verhindern ebenfalls ein Verrutschen oder ein Verschieben des Schlauches auf der Felge unter dem Mantel. Hierdurch wird das Schlauchmaterial geschont und damit seine Lebensdauer verlängert.

Des weiteren kann der erfindungsgemäße Schlauch auch zusammen mit anderen Schläuchen oder anderen erfindungsgemäßen Schläuchen kombiniert werden, um so ein weniger anfälliges und doch leicht zu reparierendes Mehrkammersystem zu erzeugen. Auch können mehrere dieser Schläuche nacheinander unter den Mantel auf eine Felge geschoben werden, wenn dies möglicherweise eine leichtere und schnellere Montage ermöglicht.

Eine weitere Ausführungsform des Radschlauchs ist **dadurch gekennzeichnet, dass** der Schlauch sich nach Befüllen proportional gesehen mehr in Längsrichtung als im Querschnitt ausdehnt. Durch diese Art der Ausdehnung kann sich der Schlauch zunächst nur entlang der Achse, also beispielsweise in Felgenrichtung ausdehnen. In dieser Richtung wird ihm auch der geringste Widerstand entgegengesetzt. Erst nach Aufbau eines gewissen Druckes wird der Schlauch dann auch noch in seinem Querschnitt ausgedehnt. Ermöglicht wird dies durch Verwendung mehrerer verschiedener Fasern im Schlauchgewebe oder durch Schlauchwerkstoffe, die unterschiedlich zusammengesetzt bzw. vulkanisiert sind.

In weiteren besonderen Ausführungsformen der Erfindung ist der Radschlauch **dadurch gekennzeichnet, dass** auf Teilen des Schlauches ein Fixiermittel aufgebracht ist, oder mindestens eines der beiden Schlauchenden so modifiziert ist, dass er eine Ausbuchtung oder einen Hohlraum aufweist. Auch an diesen Ausbuchtungen und Hohlräumen kann ein Fixiermittel aufgetragen sein. Diese Ausführungsformen sorgen für einen besseren Halt des Schlauches an dem Mantel oder der Felge und Halten ebenfalls die Schlauchenden zusammen.

In einer anderen Ausführungsform des Radschlauches befindet sich am Schlauchende ein Ventil, welches mit einem anderen Schlauchende verbunden werde kann. Hierdurch besteht ebenfalls die Möglichkeit lose Enden zu fixieren, beispielsweise indem man das Ventil durch eine Lasche oder Schlaufe führt und somit eine physikalische Verbindung herstellt.

Eine weitere Ausführungsform der Erfindung ist **dadurch gekennzeichnet dass** der Schlauchdurchmesser an mindestens einer Stelle einen unterschiedlichen Querschnitt aufweist. So kann der Schlauchdurchmesser in seiner Länge zu- oder abnehmen oder jegliche andere Geometrie annehmen, welche den Gebrauch des Schlauches in seiner jeweiligen Punktion unterstützt.

In einer weiteren Ausführungsform der Erfindung ist der Radschlauch **dadurch gekennzeichnet, dass** die Unterseite des Schlauches verstärkt ist, dies erspart das Felgenband, falls dies beschädigt sein sollte.

Eine weitere Ausführungsform der Erfindung sicht vor, dass mindestens ein Enden des Schlauches mit einer Kappe bedeckt ist, wobei die Kappe auch das Ende des Schlauches sein kann. Diese Kappe oder Kappen können so modifiziert sein, dass sie zur Befestigung des Schlauches an den Enden oder am Mantel oder an der Felge dienen können. Hiezu können chemische und physikalisch Fixiermittel verwendet werden. So zum Beispiel Schellen, Klebe- oder Klettverbindungen, Laschen und ihre Gegenstücke (Curte), Knöpfe, Nieten und Ähnliches.

Im folgenden werden nicht einschränkend zu verstehende Ausführungsbeispiele anhand der Zeichnungen besprochen. In dieser zeigen:
Fig. **1** eine Felge und den erfindungsgemäßen Radschlauch anhand einer schematischen Darstellung,
Fig. **2** den aufgespannten Radschlauch mit den beiden Enden,
Fig. **5** einen erfindungsgemäßen Schlauch mit einer Materialverstärkung und einem Profil.

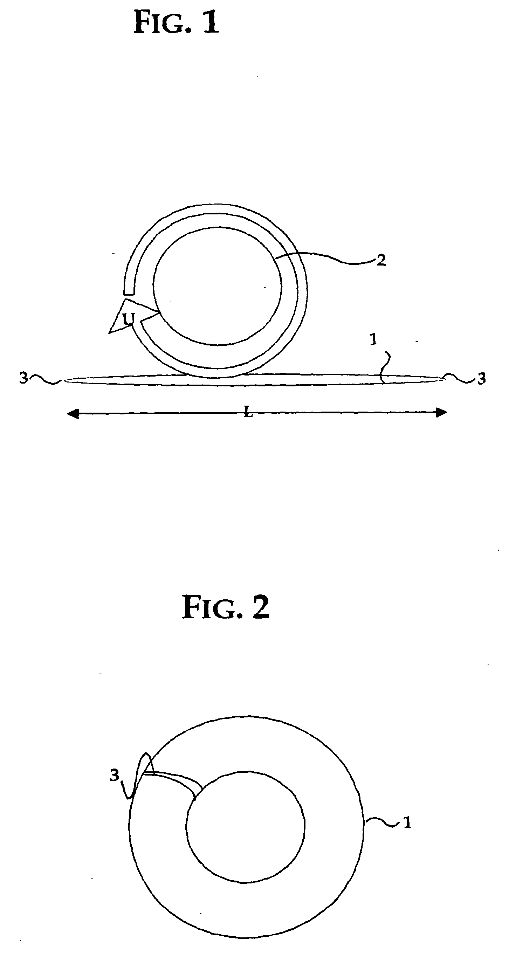

Fig. **1** zeigt eine Felge **2** und den erfindungsgemäßen Radschlauch **1** anhand einer schematischen Darstellung, der Umfang der Felge **2** U korrespondiert zur Länge L des Radschlauches **1**. Vorzugsweise entspricht die Länge des Radschlauches **1** der Länge des Mantels, welcher wiederum in einer direkten Beziehung zum Umfang der Felge steht.

Fig. **2** zeigt den aufgespannten Radschlauch **1** mit den beiden Enden. **3,** wobei die Enden **3** durch den im Schlauch ausgebauten Druck und den Mantel zusammengedrückt werden. Zusätzlich kann ein Verbindungsmittel an den Enden angebracht sein, um diese auch physikalisch zu verbinden.

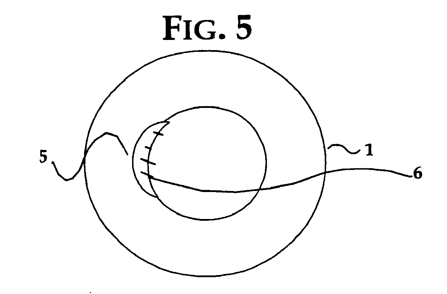

Fig. **5** zeigt einen erfindungsgemäßen Schlauch mit einer Materialverstärkung **5** und einem Profil **6.** Die Materialverstärkung **5** kann genauso wie das Profil **6** dazu beitragen die gewünschte Krümmung des Radschlauches **1** zu erzeugen.

### Bezugszeichenliste:

- 1: Radschlauch
- 2: Felge
- 3: Schlauchende, Ende
- 4: Schelle
- 5: Materialverstärkung
- 6: Profil auf den Radschlauch

## Patentansprüche

1. Radschlauch (**1**) zur Bespannung auf ein Laufrad oder eine Felge (**2**) oder eine andere kreisförmige, ovale, ellipsoide oder sonst wie gerundete Führung, welcher nicht in sich geschlossen ist, sondern mindestens zwei Enden (**3**) aufweist, wobei der Radschlauch aus einem Hauptmaterial besteht und wobei Teile des Schlauches andere elastische Eigenschaften als das Hauptmaterial aufweisen **dadurch gekennzeichnet, dass** der Schlauch sich nach Befüllen proportional gesehen mehr in Längsrichtung als im Querschnitt ausdehnt

2. Radschlauch (**1**) nach Anspruch 2 **dadurch gekennzeichnet, dass** die anderen elastischen Eigenschaften durch Einbringen eines anderen Schlauchmaterials erzeugt werden.

3. Radschlauch (**1**) nach einem der vorhergehenden Ansprüche **dadurch gekennzeichnet, dass** die anderen elastischen Eigenschaften durch Verstärkung (**5**) oder Ausdünnung des Hauptmaterials erzeugt werden.

4. Radschlauch (**1**) nach einem der vorhergehenden Ansprüche **dadurch gekennzeichnet, dass** dem Radschlauch (**1**) oder Teilen des Radschlauches (**1**) ein Profil (**6**) aufgeprägt wird.

5. Radschlauch (**1**) nach einem der vorhergehenden Ansprüche **dadurch gekennzeichnet, dass** der Radschlauch (**1**) oder Teile des Radschlauches (**1**) Mittel aufweisen, welche den Radschlauch (**1**) mit dem Laufrad, der Felge oder der Führung verbinden.

6. Radschlauch (**1**) nach einem der vorhergehenden Ansprüche **dadurch gekennzeichnet, dass** der Radschlauch (**1**) oder Teile des Radschlauches (**1**) Mittel aufweisen, welche den Radschlauch (**1**) mit dem Mantel verbinden.

7. Radschlauch nach einem der vorhergehenden Ansprüche **gekennzeichnet**, dass auf Teilen des Schlauches ein Fixiermittel aufgebracht ist.

8. Radschlauch nach einem der vorhergehenden Ansprüche **dadurch gekennzeichnet, dass** mindestens eines der beiden Schlauchenden so modifiziert ist, dass er eine Ausbuchtung oder einen Hohlraum aufweist.

9. Radschlauch nach Anspruch 8, **dadurch gekennzeichnet, dass** die Ausbuchtung oder der Hohlraum mit einem Fixiermittel beschichtet wird.

10. Radschlauch nach einem der vorhergehenden Ansprüche **dadurch gekennzeichnet, dass** sich am ein sich am Schlauchende befindliches Ventil mit dem anderen Schlauchende verbinden kann.

11. Radschlauch nach einem der vorhergehenden Ansprüche **dadurch gekennzeichnet, dass** der Schlauchdurchmesser an mindestens einer Stelle einen unterschiedlichen Querschnitt aufweist.

12. Radschlauch nach einem der vorhergehenden Ansprüche **dadurch gekennzeichnet, dass** die Unterseite des Schlauches verstärkt ist.

13. Radschlauch nach einem der vorhergehenden Ansprüche, **dadurch gekennzeichnet, dass** die Enden des Radschlauches mit Kappen bedeckt sind.

## Claims

1. Inner tube (1) for clamping to a wheel or a rim (2) or some other guide which is circular, oval, ellipsoidal or rounded in some other way and which is not of a continuous shape but rather has at least two ends (3), wherein the inner tube is composed of a main material, and wherein parts of the tube have different elastic properties than the main material, **characterized in that** after inflation the tube expands, considered in proportional terms, more in the longitudinal direction than in cross section.

2. Inner tube (1) according to Claim 2, **characterized in that** the other elastic properties are produced by introducing a different tube material.

3. Inner tube (1) according to one of the preceding claims, **characterized in that** the other elastic properties are produced by reinforcement (5) or thinning out of the main material.

4. Inner tube (1) according to one of the preceding claims, **characterized in that** a profile (6) is impressed on the inner tube (1) or parts of the inner tube (1).

5. Inner tube (1) according to one of the preceding claims, **characterized in that** the inner tube (1) or parts of the inner tube (1) have means which connect the inner tube (1) to the wheel, the rim or the guide.

6. Inner tube (1) according to one of the preceding claims, **characterized in that** the inner tube (1) or parts of the inner tube (1) have means which connect the inner tube (1) to the outer casing.

7. Inner tube according to one of the preceding claims, **characterized in that** a securing means is applied to parts of the tube.

8. Inner tube according to one of the preceding claims, **characterized in that** at least one of the two tube ends is modified in such a way that it has a depression or a cavity.

9. Inner tube according to Claim 8, **characterized in that** the depression or the cavity is coated with a securing means.

10. Inner tube according to one of the preceding claims, **characterized in that** a valve which is located at the tube end can connect to the other tube end.

11. Inner tube according to one of the preceding claims, **characterized in that** the tube diameter has a different cross section at at least one location.

12. Inner tube according to one of the preceding claims, **characterized in that** the underside of the tube is reinforced.

13. Inner tube according to one of the preceding claims, **characterized in that** the ends of the inner tube are covered with caps.

## Revendications

1. Boyau de roue (1) à tendre sur une roue mobile ou une jante (2) ou un autre guidage circulaire, ovale, elliptique ou arrondi de toute autre manière, qui n'est pas fermé en soi mais présente au moins deux extrémités (3), le boyau de roue se composant d'un matériau principal et des parties du boyau présentant des caractéristiques élastiques différentes de celles du matériau principal, **caractérisé en ce que** le boyau s'étire après le gonflage, considéré de manière proportionnelle, davantage dans la direction longitudinale qu'en section transversale.

2. Boyau de roue (1) selon la revendication 2, **caractérisé en ce que** les autres caractéristiques élastiques sont produites par l'introduction d'un autre matériau de boyau.

3. Boyau de roue (1) selon l'une quelconque des revendications précédentes, **caractérisé en ce que** les autres caractéristiques élastiques sont produites par renforcement (5) ou amincissement du matériau principal.

4. Boyau de roue (1) selon l'une quelconque des revendications précédentes, **caractérisé en ce que** le boyau de roue (1) ou des pièces du boyau de roue (1) sont marqués d'un profilage (6).

5. Boyau de roue (1) selon l'une quelconque des revendications précédentes, **caractérisé en ce que** le boyau de roue (1) ou des pièces du boyau de roue (1) présentent des moyens qui relient le boyau de roue (1) à la roue mobile, la jante ou le guidage.

6. Boyau de roue (1) selon l'une quelconque des revendications précédentes, **caractérisé en ce que** le boyau de roue (1) ou des pièces du boyau de roue (1) présentent des moyens qui relient le boyau de roue (1) à l'enveloppe.

7. Boyau de roue selon l'une quelconque des revendications précédentes, **caractérisé en ce qu'**un moyen de fixation est monté sur des pièces du boyau.

8. Boyau de roue selon l'une quelconque des revendications précédentes, **caractérisé en ce qu'**au moins l'une des deux extrémités du boyau est modifiée de telle sorte qu'elle présente un renflement ou une cavité.

9. Boyau de roue selon la revendication 8, **caractérisé en ce que** le renflement ou la cavité est revêtu d'un moyen de fixation.

10. Boyau de roue selon l'une quelconque des revendications précédentes, **caractérisé en ce qu'**une soupape se trouvant sur l'extrémité du boyau peut être connectée à l'autre extrémité du boyau.

11. Boyau de roue selon l'une quelconque des revendications précédentes, **caractérisé en ce que** le diamètre du boyau présente, en au moins un endroit, une section transversale différente.

12. Boyau de roue selon l'une quelconque des revendications précédentes; **caractérisé en ce que** le côté inférieur du boyau est renforcé.

13. Boyau de roue selon l'une quelconque des revendications précédentes, **caractérisé en ce que** les extrémités du boyau de roue sont recouvertes de capuchons.
